# EUROPÄISCHE PATENTSCHRIFT

(11) **EP 1 284 517 B1**
(45) Veröffentlichungstag und Bekanntmachung des Hinweises auf die Patenterteilung: **03.02.2016**
(21) Anmeldenummer: 01119549.2
(22) Anmeldetag: 14.08.2001
(51) Int. Cl.: H01M 8/10, H01M 8/00, H01M 8/04

(54) **Brennstoffzellenkombination**
Combination of fuel cells
Combinaison de cellules à combustible

(43) Veröffentlichungstag der Anmeldung: 19.02.2003
(73) Patentinhaber: SFC Energy AG, 85649 Brunnthal (DE)
(72) Erfinder: STEFENER Manfred, 81827 München (DE); Müller, Dr. Jens, 81827 München (DE)
(74) Vertreter: Grünecker Patent- und Rechtsanwälte PartG mbB

(56) Entgegenhaltungen:
- EP-A- 1 020 942
- DE-A- 3 800 484
- DE-A- 19 930 877

## Beschreibung

### Gebiet der Erfindung

Die Erfindung betrifft allgemein eine Brennstoffzellenvorrichtung mit einer basischen Elektrolyteinrichtung und einer sauren Elektrolyteinrichtung, wobei ein Reaktionsprodukt der einen Elektrolyteinrichtung der anderen Elektrolyteinrichtung zuführbar ist. Insbesondere betrifft die Erfindung eine derartige Brennstoffzellenvorrichtung, bei der das oben genannte Reaktionsprodukt H₂O ist.

### Stand der Technik

Brennstoffzellen wandeln Energie, die in den molekularen Bindungen chemischer Verbindungen gespeichert ist, direkt in elektrische Energie um. Diese "kalte Verbrennung" unterscheidet sich von gewöhnlicher ("heißer") Verbrennung dadurch, dass die der Energieumwandlung (Redoxreaktion) zugrunde liegenden Dissoziations- und Bildungsreaktionen räumlich getrennt voneinander erfolgen und die Umwandlung der chemischen Energie in elektrische Energie nicht über den Umweg der Wärmeerzeugung und Umwandlung der Wärmeenergie in mechanische Arbeit erfolgt.

Im Falle einer Brennstoffzelle, die als Brennstoff Methanol (CH₃OH) verwendet, welcher zu Kohlendioxid und Wasser verbrannt wird, lässt sich - unabhängig von den tatsächlich ablaufenden Reaktionsschritten - für die in der Brennstoffzelle ablaufende Stoffumwandlung folgende Bilanzgleichung angeben:

CH₃OH + 1.5 O₂ → CO₂ + 2 H₂O (+ ΔG),

Die nutzbare elektrische Energie der Brennstoffzelle ist durch die Gibbssche Enthalpie ΔG dieser Reaktion gegeben, und ist unter anderem abhängig von der Betriebstemperatur der Brennstoffzelle.

Der Aufbau einer Brennstoffzelle besteht aus einer anodenseitigen Kammer und einer kathodenseitigen Kammer, die durch einen ionenleitenden (flüssigen oder festen) Elektrolyten voneinander getrennt sind. In der anodenseitigen Kammer wird der (für gewöhnlich wasserstoffhaltige) Brennstoff zugeführt, während zur kathodenseitigen Kammer der Reaktionsstoff, i.d.R. Sauerstoff zugeführt wird.

Ferner entstehen in der Brennstoffzelle Reaktionsprodukte (Verbrennungsprodukte), bspw. Wasser und/oder Kohlendioxid, welche gegebenenfalls teilweise oder vollständig abgeführt werden müssen.

Allgemein unterscheidet man saure Elektrolyten (bspw. Schwefelsäure, Phosphorsäure), durch die positive Ionen von der Anode zur Kathode wandern, und basische Elektrolyten (bspw. Kalilauge), durch die negative Ionen von der Kathode zur Anode wandern.

Bei einer Brennstoffzelle, die Methanol als Brennstoff verwendet und mit einem sauren Elektrolyten, z.B. eine Protonen leitende Membran, lassen sich die folgenden Anoden- und Kathodenreaktionen angeben:

| | |
|---|---|
| Anode: | CH₃OH + H₂O → CO₂ + 6H⁺ + 6e⁻ |
| Kathode: | 1.5 O₂ + 6H⁺ + 6e⁻ → 3H₂O |

Hieran erkennt man, dass H₂O in der Brennstoffzelle nicht nur als Verbrennungsprodukt entsteht und kathodenseitig abgeführt werden muss, sondern dass H₂O zusammen mit dem eigentlichen Brennstoff Methanol anodenseitig auch zugeführt werden muss (was aus der Bilanzgleichung nicht ersichtlich ist).

Da an der Kathode mehr Wasser als Verbrennungsprodukt entsteht, als an der Anode zugeführt werden muss, kann im Betrieb zumindest theoretisch ein entsprechender Teil dieses als Abfallprodukt entstehenden Wassers an die Anode zurückgeführt werden, so dass die Notwendigkeit einer externen Wasserzufuhr vermieden werden kann.

Diese Wasserrückführung ist aber mit mehreren regelungstechnischen Problemen verbunden:
- die Menge des Wassers, das an der Anode zugeführt werden muss, unterscheidet sich von der Menge, die an der Kathode anfällt;
- das an der Kathode anfallende Wasser liegt in der Regel in einem anderen Aggregatszustand vor (gasförmig), als es an der Anode benötigt wird (flüssig);
- das an der Kathode anfallende Wasser liegt in der Regel nicht in reiner Form vor, sondern ist mit anderen Verbrennungsprodukten (z.B. Kohlendioxid) "verunreinigt";
- die obigen Anoden- und Kathodengleichungen sind Nettogleichungen und stellen eine starke Vereinfachung des tatsächlichen Prozessablaufs dar: in der Realität umgibt sich jedes diffundierende Proton mit einer Hydrathülle und zieht damit einen parasitären Anteil Wasser von der Anode durch den Elektrolyten zur Kathode; eine realistischere Anodengleichung hat deshalb die Form:

   CH₃OH + (1+x) H₂O. → CO₂ + 6H⁺ + 6e⁻ + xH₂O,
wobei der Wert von x von den Betriebsparametern, insbesondere der Temperatur, abhängt.

Es sei hier betont, dass der Parameter x keinesfalls vernachlässigbar ist (x<<1), sondern dass im Gegenteil Werte von x>1 und in der Größenordnung von 10⁰...10¹ der Realität weitaus näher kommen als die Netto-Bilanzgleichung (x=0). So nimmt x bei einer realistischen Hydrathülle von 1 bis 6 Wassermolekülen je Proton die Werte 6 bis 18 an.

Um besser zu verdeutlichen, welche Stoffmengen an der Anode und Kathode tatsächlich zugeführt werden müssen, ist es zweckmäßig, die Bilanzgleichung in folgender (ungekürzter) Form anzugeben:

[CH₃OH + (1+x) H₂O] + 1.5 O₂ → CO₂ + (3+x) H₂O,

wobei zur Aufrechterhaltung des Betriebs anodenseitig ständig das in eckigen Klammern angegebene Stoffgemisch [CH₃OH + (1+x) H₂O] zugeführt werden muss.

Ähnliche Probleme treten auch bei einer Brennstoffzelle mit basischen Elektrolyten auf. Beispielsweise lassen sich für eine DMFC (*direct methanol fuel cell*)-Brennstoffzelle mit einer Hydroxidionen leitenden Polymermembran die folgenden Anoden- und Kathodenreaktionen angeben:

| | | | |
|---|---|---|---|
| Kathode: | 1.5 O₂ + 3H₂O + 6e⁻ | → | 6OH⁻ |
| Anode: | CH₃OH + 6OH⁻ | → | CO₂ + 5H₂O +6e⁻ |

Auch hier tritt Wasser nicht nur als Verbrennungsprodukt auf, sondern muss kathodenseitig zugeführt werden. Einer Rückführung wird unter anderem dadurch erschwert, dass das Wasser anodenseitig als Wasser/Methanol-Gemisch vorliegt, dessen Trennung technisch aufwendig ist. Ferner umgibt sich das Hydroxid-Anion, ähnlich wie das Proton, mit einer Hydrathülle, so dass es zur Veranschaulichung der daraus resultierenden Konsequenzen auch hier zweckmäßig ist, die Bilanzgleichung in ungekürzter Form anzugeben:

CH₃OH + [1.5 O₂ + (3+y) H₂O] → CO₂ + (5+y) H₂O.

Zur Aufrechterhaltung des Betriebs muss also pro anodenseitig zugeführter Formeleinheit Methanol kathodenseitig anteilsmäßig das in eckigen Klammern angegebene Stoffgemisch [1.5 O₂ + (3+y) H₂O] zugeführt werden, wobei der Wasserbedarf (3+y) H₂O durch die an der Anode entstehende größere Wassermenge (5+y) H₂O zwar prinzipiell gedeckt werden kann, die technische Realisierung der anteilsmäßigen Wasserrückführung aber wie erwähnt mit hohen technischen Schwierigkeiten verbunden ist.

Wegen dieser oben anhand von Beispielen beschriebenen allgemeinen Neigung von durch einen ionenleitenden Elektrolyten diffundierenden Ionen, sich mit einer Hydrathülle zu umgeben und diese Hydrathülle mit durch den Elektrolyten zu ziehen (Elektroosmose), treten vergleichbare Effekte auch bei Brennstoffzellen auf, welche einen anderen Brennstoff als Methanol verwenden.

Somit besteht ein allgemeines, den Aufbau wie den Betrieb von Brennstoffzellensystemen erschwerendes Problem darin, dass auf einer Seite als Reaktionsprodukte anfallende Stoffe, sei es als Folge von parasitären Transport durch den Elektrolyten (Elektroosmose) oder als Folge einer chemischen Reaktion oder einer Kombination davon, auf der anderen Seite benötigt werden, eine einfache Rückführung dieser Reaktionsprodukte mit verschiedenen technischen Problemen konfrontiert ist.

### Beschreibung der Erfindung

Es ist somit eine Aufgabe der Erfindung, Verfahren und Brennstoffzellenvorrichtungen bereitzustellen, die diese Probleme überwinden.

Diese Aufgaben werden erfindungsgemäß durch Brennstoffzellenvorrichtungen mit den in Anspruch 1 angegebenen Merkmalen und das in Anspruch 10 definierte Verfahren gelöst.

Demzufolge weist eine erfindungsgemäße Brennstoffzellenvorrichtung eine Elektrolytvorrichtung auf, welche eine basische Elektrolyteinrichtung und eine saure Elektrolyteinrichtung umfasst, wobei die Brennstoffzellenvorrichtung so ausgebildet ist, dass wenigstens ein Teil wenigstens eines Reaktionsproduktes, das an einer Elektrolyteinrichtung anfällt, der anderen Elektrolyteinrichtung zuführbar ist.

Das erfindungsgemäße Verfahren zum Betreiben eines Brennstoffzellenvorrichtung umfasst die Schritte: Bereitstellen einer basischen Elektrolyteinrichtung und einer sauren Elektrolyteinrichtung, Zuführen von Brennstoff und Oxidationsmitteln, Abführen von Reaktionsprodukten, wobei wenigstens ein Teil wenigstens eines Reaktionsproduktes, das an einer Elektrolyteinrichtung anfällt, der anderen Elektrolyteinrichtung zugeführt wird.

Insbesondere wenn die beiden Elektrolyteinrichtungen mit demselben Brennstoff betrieben werden, ist es dabei aufgrund der teilweise komplementären Eigenschaften von sauren und basischen Elektrolyten möglich, ohne aufwendige Trennung einen an einer Elektrolytvorrichtung anodenseitig als Reaktionsprodukt anfallenden Stoff der anderen Elektrolytvorrichtung anodenseitig zuzuführen, und/oder einen an einer Elektrolytvorrichtung kathodenseitig als Reaktionsprodukt anfallenden Stoff der anderen Elektrolytvorrichtung kathodenseitig zuzuführen.

In einer bevorzugten Weiterbildung ist wenigstens ein an der einen Elektrolyteinrichtung anfallendes Reaktionsprodukt vollständig der anderen Elektrolyteinrichtung zuführbar.

Dadurch muss für dieses Reaktionsprodukt an der einen Elektrolyteinrichtung keine Vorrichtung zur Entsorgung dieses wenigstens einen Reaktionsprodukts vorgesehen werden, was eine einfachere Ausbildung und einen vereinfachten Betrieb der Brennstoffzellenvorrichtung ermöglicht.

Eine einfache Ausbildung einer erfindungsgemäßen Brennstoffzellenvorrichtung weist umfasst eine basische Elektrolyteinrichtung, die durch einen einzigen Anionen leitenden Bereich gebildet wird, und eine saure Elektrolyteinrichtung, die durch einen einzigen Kationen leitenden Bereich gebildet wird. Viele vorteilhaften Weiterbildungen von Brennstoffzellenvorrichtungen sind aber nicht auf je einen einzigen derartigen Bereich beschränkt.

So weisen bevorzugte Weiterbildungen von Brennstoffzellenvorrichtung eine saure Elektrolyteinrichtung mit einer Mehrzahl von Kationen leitenden Bereichen und/oder eine basische Elektrolyteinrichtung mit einer Mehrzahl von Anionen leitenden Bereichen.

Dadurch sind Anordnungen möglich, bei der Reaktionsprodukte abwechselnd mehrmals nacheinander die basische und die saure Elektrolyteinrichtung durchlaufen, was eine vollständigeres Ausnutzen dieser Substanzen und damit ein effektiveres Betreiben der Brennstoffzellenvorrichtung ermöglicht.

In einer besonders bevorzugte Weiterbildung der erfindungsgemäßen Brennstoffzellenvorrichtung sind die Anionen leitenden Bereiche und die Kationen leitenden Bereiche alternierend angeordnet.

Dabei kann die alternierende Anordnung der Bereiche entlang einer Richtung erfolgen (eindimensionale Anordnung) und beispielsweise ein Streifenmuster bilden. Diese Bereiche können alle die gleiche Dimensionierung aufweisen, sie können sich aber auch in Durchlaufrichtung ändern.

In anderen bevorzugten Weiterbildungen erfolgt die alternierende Anordnung in zwei Richtungen gleichzeitig. Bevorzugte zweidimensional Anordnungen mit gleich großen Bereichen umfassen: Schachbrettmuster, Rautenmuster, Dreiecksmuster, Sechseckmuster. Bei einer zweidimensionalen Anordnung unterschiedlich großer Bereiche stehen beliebig viele Möglichkeiten offen. Diese Anordnungen sind im Hinblick auf eine möglichst vollständige Verbrennung der zugeführten Brennstoffe und Ausnutzung der anfallenden Reaktionsprodukte optimiert.

In einer besonders vorteilhaften Weiterbildung der Brennstoffzellenvorrichtung umfasst die Kathodenvorrichtung der Brennstoffzellenvorrichtung eine einzige Kathodenkammer und/oder die Anodenvorrichtung der Brennstoffzellenvorrichtung eine einzige Anodenkammer.

Dies erlaubt eine besonders einfache und effektive Steuerung des Stoffflusses, da zumindest teilweise gemeinsame Einrichtungen zur Brennstoffzuführung, Oxidationsmittelzuführung, und Abfallstoffabführung verwendet werden können.

Besonders vorteilhaft ist eine Elektrolytvorrichtung, welche als eine zusammenhängende Struktur ausgebildet ist, aber eine örtlich unterschiedliche chemische Zusammensetzung aufweist, wobei Bereiche unterschiedlicher chemischer Zusammensetzung die Kationen leitenden Bereiche (d.h. die saure Elektrolyteinrichtung) und die Anionen leitenden Bereiche (d.h. die basische Elektrolyteinrichtung) bilden.

Bevorzugt umfasst die Elektrolytvorrichtung der Brennstoffzellenvorrichtung eine Ionen leitende Membran. Insbesondere ist es vergleichsweise einfach, Membranen mit örtlich unterschiedlicher chemischer Zusammensetzung herzustellen, die Anionen bzw. Kationen leitende Bereiche bilden, wodurch die Elektrolytvorrichtung der Brennstoffzellenvorrichtung als eine einzige zusammenhängende Membran ausgebildet werden kann.

Die nachfolgende Beschreibung der Erfindung anhand von bevorzugten Ausbildungsformen und in Bezug auf die Figuren erfolgt am Beispiel von Methanol als Brennstoff verwendenden Brennstoffzellen, ist aber keineswegs auf eine solche beschränkt.

Zum besseren Verständnis der Erfindung und der ihr zugrundeliegenden Problematik werden nachfolgend die ungekürzten Reaktionsgleichungen am Beispiel von Methanol verwendenden Brennstoffzellen zusammengefasst:
Brennstoffzelle mit saurem Elektrolyten:

| | | | |
|---|---|---|---|
| Anode | CH₃OH + (1+x) H₂O | → | CO₂ + 6e⁻ + (6H⁺ + xH₂O), |
| Kathode: | 1.5 O₂ + 6H⁺ + 6e⁻ | → | 3H₂O |
| Gesamt | [CH₃OH + (1+x)H₂O] + {1.5 O₂} | → | [CO₂] + {(3+x)H₂O} |

In der Gesamtgleichung stehen die zuzuführenden Stoffe auf der linken Seite, die abzuführenden Reaktionsprodukte auf der rechten Seite.

Dabei stehen die eckigen Klammern für die anodenseitig zu- bzw. abzuführenden Stoffe und die geschweiften Klammern für die kathodenseitig zu- bzw. abzuführenden Stoffe.

Brennstoffzelle mit basischem Elektrolyten:

| | | | |
|---|---|---|---|
| Anode: | CH₃OH + 6OH⁻ | → | CO₂ + 5H₂O +6e⁻ |
| Kathode: | 1.5 O₂ + (3+y) H₂O + 6e⁻ | → | (6OH⁻ + yH₂O) |
| Gesamt | [CH₃OH] + {1.5 O₂ + (3+y) H₂O} | → | [CO₂] + {(5+y) H₂O} |

Auch hier stehen in der Gesamtgleichung die eckigen Klammern für die anodenseitig zu- bzw. abzuführenden Stoffe und die geschweiften Klammern für die kathodenseitig zu- bzw. abzuführenden Stoffe.

In den Figuren zeigen:
- Fig.1: ein erstes Ausführungsbeispiel der erfindungsgemäßen Brennstoffzellenvorichtung;
- Fig.2: ein zweites Ausführungsbeispiel der erfindungsgemäßen Brennstoffzellenvorichtung;
- Fig.3: ein drittes Ausführungsbeispiel der erfindungsgemäßen Brennstoffzellenvorichtung,
- Fig.4: ein viertes Ausführungsbeispiel der erfindungsgemäßen Brennstoffzellenvorichtung;
- Fig.5: ein fünftes Ausführungsbeispiel der erfindungsgemäßen Brennstoffzellenvorichtung;
- Fig.6: ein sechstes Ausführungsbeispiel der erfindungsgemäßen Brennstoffzellenvorichtung;
- Fig.7: ein bevorzugtes Ausführungsbeispiel einer Elektrolytvorrichtung für die erfindungsgemäße Brennstoffzellenvorrichtung;
- Fig.8: das in Fig. 7 gezeigte Ausführungsbeispiel der Elektrolytvorrichtung aus einem anderen Blickwinkel;
- Fig.9: ein weiteres bevorzugtes Ausführungsbeispiel für eine Elektrolytvorrichtung.

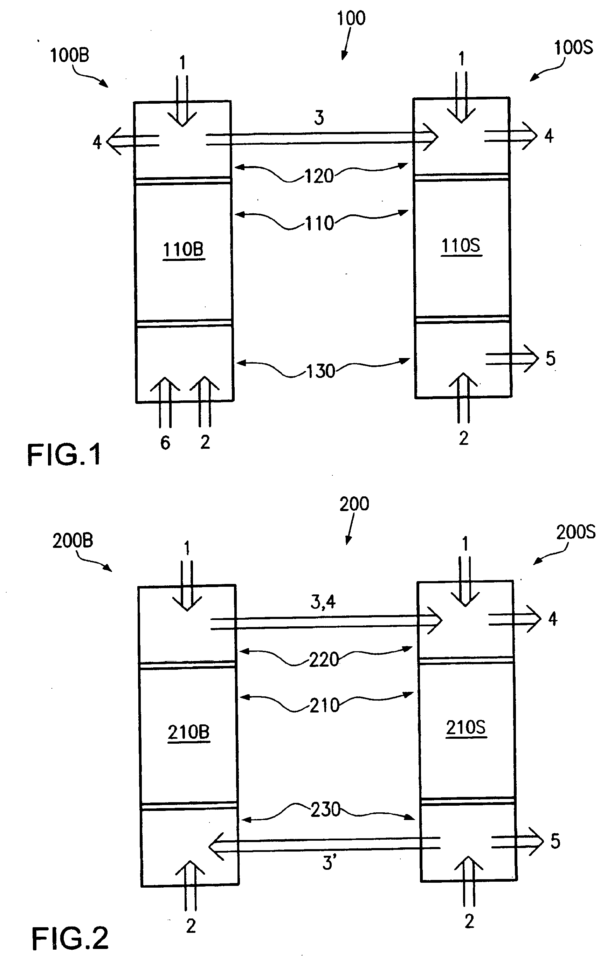

Figur 1 beschreibt eine erfindungsgemäße Brennstoffzellenvorrichtung 100, welche aus einer Kombination von zwei im Wesentlichen separaten Brennstoffzellen 100B und 100S aufgebaut ist. Eine dieser beiden Brennstoffzellen weist einen basischen Elektrolyten 110B auf, die zweite Brennstoffzelle einen sauren Elektrolyten 110S.

Die Brennstoffzellen 100B, 100S sind nur schematisch dargestellt. Beispielsweise kann jede der beiden Brennstoffzellen als ein Brennstoffzellenstack ausgebildet sein.

Die beiden Elektrolyten 110B, 110S bilden die Elektrolytvorrichtung 110 der kombinierten Brennstoffzellenvorrichtung 100.

Bei beiden Brennstoffzellen 100B, 100S wird an der jeweiligen Anodenkammer 120 der für beide Brennstoffzellen identische Brennstoff 1, an den Kathodenkammern 130 jeweils dasselbe Oxidationsmittel 2 zugeführt. Aus den Kathodenkammem wird ferner das Verbrennungsprodukt 4 abgeführt.

Im Fall einer vorliegenden Beispiel ist der Brennstoff 1 Methanol und das Oxidationsmittel 2 Sauerstoff, beispielsweise ein Sauerstoff enthaltendes Gasgemisch wie Luft. Das Verbrennungsprodukt 4 ist Kohlendioxid.

Ferner muss der basischen Elektrolyteinrichtung 110B kathodenseitig neben dem Oxidationsmittel 2, d. h. Sauerstoff gemäss der oben angegebenen Kathodengleichung noch eine bestimmte Menge Wasser 6 zugeführt werden, welche für den Ablauf der Reaktionen in der Brennstoffzelle notwendig ist. Gleichzeitig tritt Wasser aber auch anodenseitig wieder aus: teilweise neu als Folge der ablaufenden chemischen Prozesse gebildet, teilweise durch Diffusion durch den Elektrolyten. Ohne Unterscheidung dieser Prozesse wird hierfür der Ausdruck Reaktionsprodukt verwendet.

Erfindungsgemäß werden nun die beiden Brennstoffzellen 100S und 100B zu einer Brennstoffzellenvorrichtung 100 kombiniert, indem das anodenseitig austretende Reaktionsprodukt 3 (hier: Wasser) der Anodenkammer 120 der sauren Brennstoffzelle 100S zugeführt wird.

In der Anodenkammer 120 der sauren Brennstoffzelle 100S bildet es mit dem gleichzeitig zugeführten Brennstoff Methanol 1 das für den Betrieb einer sauren Elektrolyteinrichtung erforderliche anodenseitige Methanol/Wasser-Gemisch ergibt.

Da die Anodenkammem 120 der beiden Brennstoffzellen 100S und 100B die gleichen Substanzen aufweisen (in diesem Beispiel: Methanol, Kohlendioxid, Wasser), muss das aus der einen Anodenkammer in die andere Anodenkammer übergeleitete Reaktionsprodukt 3 keinen aufwendigen Reinigungsprozessen unterzogen werden. Vielmehr kann das Reaktionsprodukt 3 (Wasser) durchaus mit den anderen Stoffen, d.h. dem Brennstoff 1 (Methanol) und den Verbrennungsprodukt 4 (Kohlendioxid) "verunreinigt" sein, ohne das dies die Funktionsweise der Vorrichtung beeinträchtigt.

Schließlich erfolgt bei der sauren Brennstoffzelle kathodenseitig neben der Zufuhr von Oxidationsmitteln 2 (Sauerstoff) die Abfuhr des im Gesamtprozess anfallenden überschüssigen Wassers 5.

Die erfindungsgemäße Ausführungsform von Figur 1 hat gegenüber einer Wasserrückführung von der Anodenkammer in die Kathodenkammer (oder umgekehrt) einer herkömmlichen Brennstoffzelle den Vorteil, dass keine aufwendige Stofftrennung durchgeführt werden muss.

Im vorliegenden Beispiel liegen in der Anodenkammer 120 der basischen Brennstoffzelle 10OB die Stoffe Methanol 1, Wasser 3, und Kohlendioxid 4 vor. Dieselben Stoffe liegen bei der sauren Brennstoffzelle ebenfalls vor, wobei im Unterschied zur basischen Brennstoffzelle Wasser nicht als Reaktionsprodukt anfällt, sondern vielmehr zum Erreichen der gewünschten Reaktion erforderlich ist.

Somit kann das Wasser aus der Anodenkammer der basischen Brennstoffzelle in die Anodenkammer der sauren Brennstoffzelle überführt werden, ohne dass dabei eine Reinigung von unerwünschten Stoffen erfolgen muss.

Figur 2 zeigt eine weitere erfindungsgemäße Ausführungsform einer Brennstoffzellenvorrichtung 200, die aus einer Kombination einer basischen Brennstoffzelle und einer sauren Brennstoffzelle besteht.

Im Unterschied zu dem in Figur 1 gezeigten Ausführungsbeispiel weist die nunmehr beschriebene Brennstoffzellenkombination keinerlei externe Wasserzufuhr auf. Vielmehr wird ein Teil 3' des bei der "sauren Brennstoffzelle" 200S an der Kathodenseite 230 anfallenden Wassers in die Kathodenkammer 230 der "basischen Brennstoffzelle" 200B übergeleitet. Durch Zufuhr von Sauerstoff 2 entsteht in dieser Kammer 230 das zur Bildung der Hydroxid-Anionen erforderliche Sauerstoff/Wasser-Gemisch.

Wie schon einleitend bemerkt, diffundieren die Hydroxid-Anionen durch den basischen Elektrolyten 210B, wobei sie sich mit einer Hydrathülle umgeben. Das hierdurch in die Anodenkammer 220 transportierte Wasser 3 wird nun zusammen mit dem bei der eigentlichen Verbrennung der Methanols anfallenden Wassers 3 und Kohlendioxids 4 in die Anodenkammer 220 der sauren Brennstoffzelle 200S transportiert. Hier wird das Kohlendioxid 4 zum Beispiel durch externe Abfuhr den weiteren Transport- und Reaktionsprozessen entzogen, währen das Wasser 3 zusammen mit dem zugeführte Brennstoff 1 das zum Betreibend er sauren Brennstoffzelle 200S erforderliche Wasser/Methanol-Gemisch ergibt.

In der sauren Brennstoffzelle 200S laufen wieder dieselben wie schon im Zusammenhang mit Figur 1 beschriebenen Reaktionen ab, wobei nunmehr das in die Kathodenkammer 220 transportierte Wasser zu einem Teil 3' Im Kreislauf bleibt, und der überschüssige Teil 5 aus dem System 200 entnommen wird.

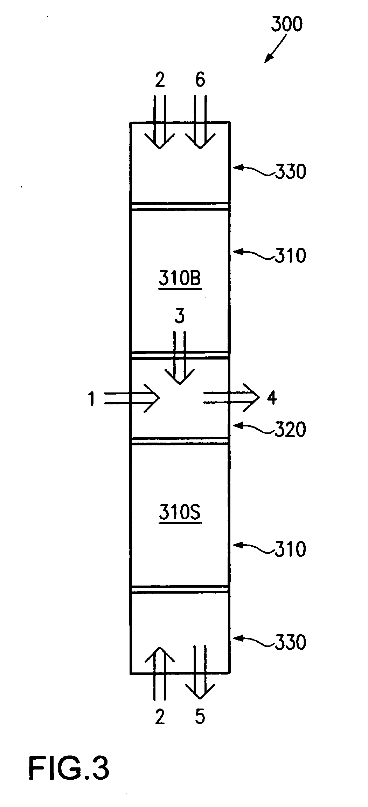

Figur 3 zeigt ein weiteres Ausführungsbeispiel der erfindungsgemäßen Brennstoffzellenvorrichtung 300, das sich nunmehr im Gegensatz zu den in Figur 1 und 2 gezeigten Ausführungsbeispielen nicht mehr aus zwei mehr oder weniger separat funktionsfähigen Brennstoffzellen aufgebaut ist.

Vielmehr weist das Ausführungsbeispiel von Figur 3 eine Brennstoffzellenvorrichtung 300 auf, die eine basische Elektrolyteinrichtung 310B und eine saure Elektrolyteinrichtung 310S umfasst, welche eine gemeinsame Anodenkammer 320 aufweisen.

An der Kathodenseite 330 der basischen Elektrolyteinrichtung 310B wird ein durch die Bezugszeichen 2 und 6 bezeichnetes Sauerstoff/Wasser-Gemisch in die Kathodenkammer 230 zugeführt. Gleichzeitig wird der Anodenkammer 320 reines Methanol zugeführt.

Somit laufen in der basischen Elektrolyteinrichtung 310B die bereits mehrfach beschriebenen Prozesse ab, bei denen Methanol 1 unter Sauerstoff 2 zu Kohlendioxid 4 und Wasser 3 "verbrannt" wird, und eine zusätzliche Menge Wasser 3 durch Elektoosmose durch den basischen Elektrolyten 110B aus der Kathodenkammer 330 in die Anodenkammer 320 gezogen wird.

Durch die gemeinsame Anodenkammer 320 ist es nicht nötig, der Anodenkammer extern Wasser zuzuführen. Vielmehr kann das in der Anodenkammer 320 entstehende Methanol/Wasser-Gemisch verwendet werden, die anschließende saure Elektrolyteinrichtung 310S zu betreiben, wenn an der Kathodenseite 330 der sauren Elektrolyteinrichtung 310S Sauerstoff zugeführt wird.

Das im Gesamtprozess anfallende überschüssige Wasser 5 wird aus der Kathodenkammer 330 der sauren Elektrolyteinrichtung 310S abgeführt.

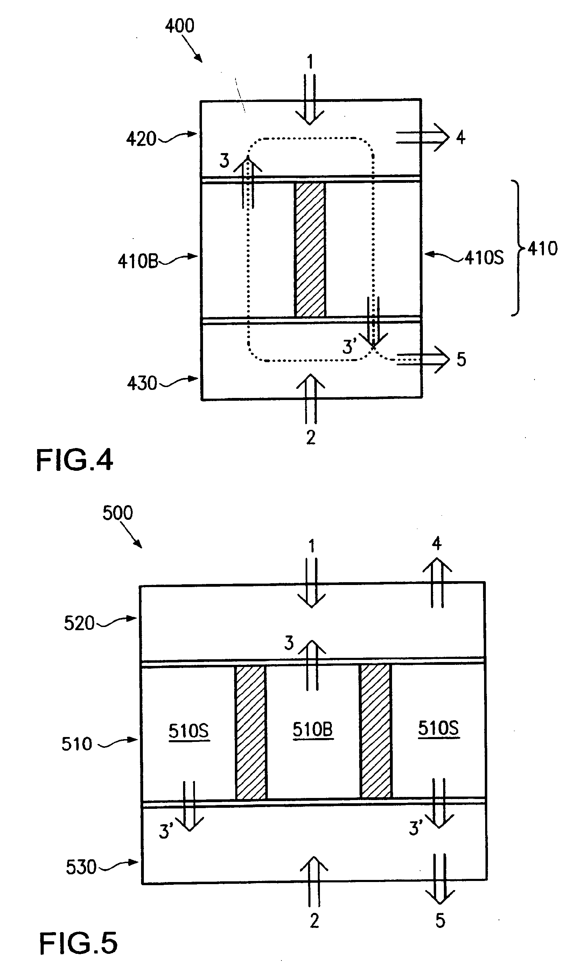

Ein weiteres erfindungsgemäßes Ausführungsbeispiel zeigt Figur 4. Hierbei weist die Elektrolytvorrichtung 410 zwei nebeneinander vorgesehene Elektrolyteinrichtungen 410S, 410B auf, von denen eine Elektrolyteinrichtung 410B basischen Charakter hat, die andere Elektrolyteinrichtung 410S sauren Charakter hat.

Die Brennstoffzellenvorrichtung 400 ist so ausgebildet, dass die beiden Elektrolyteinrichtungen 410B und 410S jeweils eine gemeinsame Kathodenkammer 430 und eine gemeinsame Anodenkammer 420 aufweisen. Somit ist nur eine Zuführvorrichtung für Brennstoff 1 und eine Zuführvorrichtung für Sauerstoff 2 erforderlich.

Das in Betrieb bei der basischen Elektrolyteinrichtung 410B anodenseitig anfallende Wasser 3 bildet mit dem anodenseitig zugeführten Methanol 1 ein Methanol/Wasser-Gemisch, das für den Verbrennungsprozess bei der sauren Elektrolyteinrichtung 410S verwendbar ist.

Auf ähnliche Weise kann ein Teil des bei der sauren Elektrolyteinrichtung 410S kathodenseitig anfallenden Wassers 3' das zum Betreiben der basischen Brennstoffzellenvorrichtung 400 erforderliche kathodenseitige Wasser/Sauerstoff-Gemisch bilden. Das überschüssige Wasser 5 wird kathodenseitig abgeführt.

Figur 5 zeigt ein ähnliches Ausführungsbeispiel wie Figur 4, wobei nunmehr eine der beiden Elektrolyteinrichtungen 510S, 510B, nämlich die saure Elektrolyteinrichtung 510S zwei voneinander getrennte Bereiche umfasst, zwischen denen die basische Elektrolyteinrichtung 510B vorgesehen ist. Diese Ausführungsform wird ähnlich betrieben wie die in Figur 4 beschriebene Ausführungsform:

Aus der mittig vorgesehenen basischen Elektrolyteinrichtung 510B fällt anodenseitig Wasser 3 an, das das der Anodenkammer 520 zugeführte Methanol 1 anreichert und ein für den Betrieb der sauren Elektrolyteinrichtungen 510S erforderliches anodenseitiges Methanol/Wasser-Gemisch bildet. Auf ähnliche Weise vermischt sich das kathodenseitig an der sauren Elektrolyteinrichtung 510S austretende Wasser 3, mit dem kathodenseitig zugeführten Sauerstoff 2, und bildet hierzu das für die basische Elektrolyteinrichtung 510B erforderliche kathodenseitige Wasser/Sauerstoff-Gemisch.

Überschüssiges Wasser 5 wird wiederum kathodenseitig abgeführt.

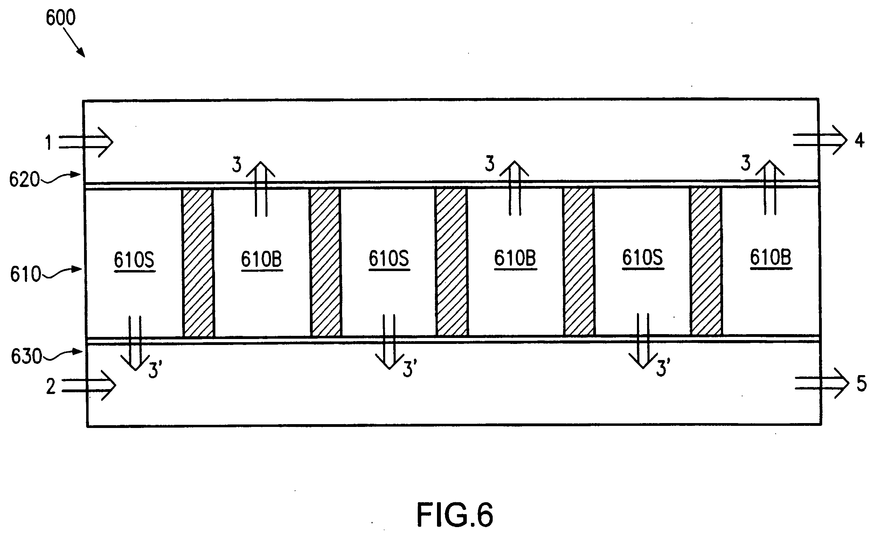

Figur 6 zeigt eine weitere bevorzugte Ausführungsform der erfindungsgemäßen Brennstoffzellenvorrichtung 600, welche eine Vielzahl von alternierend angeordneten Elektrolyteinrichtungen 610S und 610B aufweist. Diese alternierend angeordneten Bereiche bilden die Elektrolytvorrichtung 610 der Brennstoffzellenvorrichtung 600, welche eine einzige, gemeinsame Anodenkammer 620 und eine einzige, gemeinsame Kathodenkammer 630 aufweist.

Im vorliegenden Beispiel ist die Anordnung derart, dass an einer Eingangseite der gemeinsamen Anodenkammer 620 der Brennstoff 1 zugeführt wird an den Anodenseiten der nacheinander angeordneten Elektrolyteinrichtungen 610S, 610B vorbeiströmt. Auf ähnliche Weise wird Sauerstoff 2 an einer Seite der Kathodenkammer 630 eingelassen.

An jedem der sauren oder basischen Elektrolytbereiche verbrennt ein Teil des Methanols 1 anodenseitig zu Kohlendioxid 4, über den basischen Elektrolytbereichen 610B fällt zudem Wasser3 an. Das daraus entstehende Methanol/Wasser-Gemisch kann zum Betreiben der benachbarten sauren Elektrolytbereichen 610S verwendet werden.

Ähnliches passiert auf der Kathodenseite mit dem strömenden Sauerstoff 2, der an den sauren Elektrolytbereichen 610S mit Wasser 3' angereichert wird, wobei das anfallende Sauerstoff/Wasser-Gemisch zum Betreiben der benachbarten basischen Elektrolytoereiche 610B verwendet werden kann.

In der Anodenkammer 620 erfolgt in Strömungsrichtung insgesamt eine Methanolverarmung, während kathodenseitig eine Sauerstoffverarmung des vorliegenden Sauerstoff/Wassergemisches erfolgt.

Dies kann bei der Dimensionierung der aufeinanderfolgenden basischen und sauren Elektrolyteinrichtungen berücksichtigt werden, welche zweckmäßigerweise so gewählt durchgeführt wird, dass eine optimale Ausbeute erfolgt.

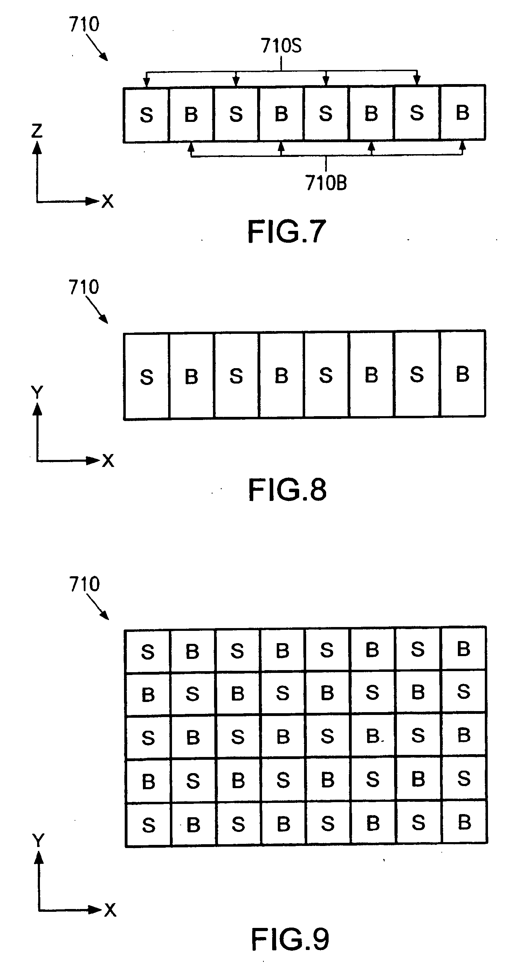

Das Ausführungsbeispiel von Figur 6 weist einzelne, voneinander getrennte Elemente der Elektrolyteinrichtung auf. Demgegenüber zeigt Figur 7 eine alternative und besonders bevorzugte Ausführungsform einer Elektrolyteinrichtung 710, die die Elektrolyteinrichtung 610 im Ausführungsbeispiel von Figur 6 ersetzen kann.

Bei der Elektrolyteinrichtung 710 von Figur 7 liegen keine voneinander isolierbaren Elektrolyteinrichtungen vor, sondern eine zusammenhängende Struktur mit örtlich unterschiedlicher chemischer Zusammensetzung. Die Zusammensetzung wurde jeweils so gewählt, dass sich Bereiche mit Kationenleitung und Bereiche mit Anionenleitung abwechseln, so dass sich eine Elektrolyteinrichtung 710 ergibt, bei der sich saure Bereiche S und basische Bereiche B abwechseln.

Wie Figur 8 zeigt, kann sich eine solche alternierende Anordnung entlang einer Richtung, z. B. entlang der x-Achse, erstrecken. Die Dimensionierung der Bereiche ist dabei frei wählbar und nicht auf das schematisch gezeigte Beispiel mit etwa gleich großen Bereichen beschränkt.

In einer vorteilhaften Ausführungsform, die Figur 9 zeigt, kann die alternierende Anordnung, aber auch entlang zweier Raumrichtungen erfolgen, und beispielsweise ein Schachbrettmuster ergeben. Weiterflächige Anordnungen wie Dreiecksmuster oder unregelmäßige Muster liegen ebenfalls im Bereich dieser Erfindung.

Die Anordnung solcher Muster und die Größe der einzelnen Bereiche werden in Einklang mit den zu erwartenden Strömungsverhältnissen in der Brennstoffzellenvorrichtung gewählt.

Unter anderem weil im Gesamtsystem Wasser anfällt (beispielsweise gemäß 2H₂+O₂→2H₂O oder CH₃OH+1.5O₂→CO₂+2H₂O), können in allen beschriebenen Ausführungsformen die basischen und saueren Elektrolyteinrichtungen im Bezug auf die in ihnen umgesetzten Stoffmengen unterschiedlich groß dimensioniert sein.

Ein wesentlicher Gesichtspunkt dabei ist immer eine möglichst vollständige Verbrennung und eine Optimierung des Wasserhaushalts des Gesamtsystems.

## Patentansprüche

1. Brennstoffzellenvorrichtung (100, 200) mit einer Elektrolytvorrichtung (110, 210), welche eine basische Elektrolyteinrichtung (110B, 210B) und eine saure Elektrolyteinrichtung (110S, 210S) umfasst, wobei die Brennstoffzellenvorrichtung (100, 200) so ausgebildet ist, dass wenigstens ein Teil wenigstens eines Reaktionsproduktes, das an einer Elektrolyteinrichtung (110B; 210B, 210S) anfällt, der anderen Elektrolyteinrichtung (110S; 210S, 210B) zuführbar ist,
in welcher die basische Elektrolyteinrichtung (110B, 210B) wenigstens einen Anionen leitenden Bereich umfasst und die saure Elektrolyteinrichtung (110S, 210S) wenigstens einen Kationen leitenden Bereich umfasst.

2. Brennstoffzellenvorrichtung (100, 200) nach Anspruch 1, in welcher wenigstens ein an der einen Elektrolyteinrichtung (110B; 210B) anfallendes Reaktionsprodukt (3) vollständig der anderen Elektrolyteinrichtung (110S; 210S) zuführbar ist.

3. Brennstoffzellenvorrichtung (500, 600, 700) nach einem der vorangegangenen Ansprüche, in welcher die saure Elektrolyteinrichtung (510S, 610S, 710S) eine Mehrzahl von Kationen leitenden Bereichen umfasst.

4. Brennstoffzellenvorrichtung (600, 700) nach einem der vorangegangenen Ansprüche, in welcher die basische Elektrolyteinrichtung (610B, 710B) eine Mehrzahl von Anionen leitenden Bereichen umfasst.

5. Brennstoffzellenvorrichtung (500, 600, 700) nach einem der Ansprüche 1 bis 4, in welcher Anionen leitende Bereiche und Kationen leitende Bereiche alternierend angeordnet sind.

6. Brennstoffzellenvorrichtung (300, 400, 500, 600, 700) nach einem der vorangegangenen Ansprüche, mit einer Kathodenvorrichtung (320, 520, 620, 720), welche eine einzige Kathodenkammer umfasst und/oder einer Anodenvorrichtung (430, 530, 630, 730), welche eine einzige Anodenkammer umfasst.

7. Brennstoffzellenvorrichtung (700) nach einem der Ansprüche 1 bis 6, in welcher die Elektrolytvorrichtung (710) eine zusammenhängende Struktur mit örtlich unterschiedlicher chemischer Zusammensetzung ist, wobei Bereiche unterschiedlicher chemischer Zusammensetzung die basischen Bereiche (B) und die sauren Bereiche (S) bilden.

8. Brennstoffzellenvorrichtung (100-700) nach einem der vorangegangenen Ansprüche, in welcher die Elektrolytvorrichtung (110-710) eine Membran umfasst.

9. Verfahren zum Betreiben eines Brennstoffzellenvorrichtung (100), umfassend die Schritte:
Bereitstellen einer basischen Elektrolyteinrichtung (110B) mit wenigstens einem Anionen leitenden Bereich und einer sauren Elektrolyteinrichtung (110S) mit wenigstens einem Kationen leitenden Bereich,
Zuführen wenigstens eines Brennstoffes (1) und wenigstens eines Oxidationsmittels (2),
Abführen von Reaktionsprodukten (1, 3, 4, 5), wobei wenigstens ein Teil wenigstens eines Reaktionsproduktes (3), das an einer Elektrolyteinrichtung (110B) anfällt, der anderen Elektrolyteinrichtung (110S) zugeführt wird.

## Claims

1. A fuel cell device (100, 200), comprising an electrolyte device (110, 210) which comprises an alkaline electrolyte means (110B, 210B) and an acid electrolyte means (110S, 210S), wherein the fuel cell device (100, 200) is formed such that at least part of at least one reaction product produced at the alkaline or the acid electrolyte means (110B; 210B, 210S) may be supplied to the other electrolyte means (110S; 210S, 2108),
in which the alkaline electrolyte means (110B, 210B) comprises at least one anion-conducting portion, and the acid electrolyte means (110S, 210S) comprises at least one cation-conducting portion.

2. A fuel cell device (100, 200) as claimed in claim 1, in which at least one reaction product (3) produced at the one electrolyte means (110B; 210B) may fully be supplied to the other electrolyte means (110S; 210S).

3. A fuel cell device (500, 600, 700) as claimed in one of the preceding claims, in which an acid electrolyte device (510S, 610S, 710S) comprises a plurality of cation-conducting portions.

4. A fuel cell device (600, 700) as claimed in one of the preceding claims, in which the alkaline electrolyte means (610B, 710B) comprises a plurality of anion-conducting portions.

5. A fuel cell device (500, 600, 700) as claimed in one of claims 1 to 4, in which anion-conducting portions and cation-conducting portions are arranged alternatingly.

6. A fuel cell device (300, 400, 500, 600, 700) as claimed in one of the preceding claims, comprising a cathode device (320, 520, 620, 720) which comprises at least one or more of one single cathode chamber, or an anode device (430, 530, 630, 730) which comprises one single anode chamber.

7. A fuel cell device (700) as claimed in one of claims 1 to 6, in which the electrolyte device (710) is a coherent structure with locally different chemical composition, wherein portions of different chemical composition form alkaline (B) and acid portions (S).

8. A fuel cell device (100-700) as claimed in one of the preceding claims, in which the electrolyte device (110-710) comprises a membrane.

9. A method of operating a fuel cell device (100), comprising the following steps:
providing an alkaline electrolyte means (110B) comprising at least one anion-conducting portion and an acid electrolyte means (110S) comprising at least one cation-conducting portion,
supplying at least one fuel (1) and at least one oxidant (2),
discharging reaction products (1, 3, 4, 5), wherein at least part of at least one reaction product (3) produced at the alkaline or the acid electrolyte means (110B) is supplied to the other electrolyte means (110S).

## Revendications

1. Système de pile ou cellule à combustible (100, 200) avec un système d'électrolyte (110, 210), qui comprend un dispositif d'électrolyte basique (110B, 210B) et un dispositif d'électrolyte acide (110S, 210S), le système de pile à combustible (100, 200) étant configuré de manière qu'au moins une partie d'au moins un produit de réaction, qui est engendré au niveau d'un dispositif d'électrolyte (110B; 210B, 210S), puisse être amené à l'autre dispositif d'électrolyte (110S; 210S, 210B),
système de pile à combustible dans lequel le dispositif d'électrolyte basique (110B, 210B) comprend au moins une zone conduisant les anions, et le dispositif d'électrolyte acide (110S, 210S) comprend au moins une zone conduisant les cations.

2. Système de pile à combustible (100, 200) selon la revendication 1, dans lequel au moins un produit de réaction (3) engendré au niveau dudit un dispositif d'électrolyte (110B, 210B) peut être amené en totalité à l'autre dispositif d'électrolyte (110S, 210S).

3. Système de pile à combustible (500, 600, 700) selon l'une des revendications précédentes, dans lequel le dispositif d'électrolyte acide (510S, 610S, 710S) comprend une pluralité de zones conduisant les cations.

4. Système de pile à combustible (600, 700) selon l'une des revendications précédentes, dans lequel le dispositif d'électrolyte basique (610B, 710B) comprend une pluralité de zones conduisant les anions.

5. Système de pile à combustible (500, 600, 700) selon l'une des revendications 1 à 4, dans lequel des zones conduisant les anions et des zones conduisant les cations sont agencées de manière alternée.

6. Système de pile à combustible (300, 400, 500, 600, 700) selon l'une des revendications précédentes, comprenant un système de cathode (320, 520, 620, 720), qui comprend une seule chambre de cathode, et/ou un système d'anode (430, 530, 630, 730), qui comprend une seule chambre d'anode.

7. Système de pile à combustible (700) selon l'une des revendications 1 à 6, dans lequel le système d'électrolyte (710) est une structure continue d'un seul tenant avec une composition chimique localement différente, des zones de composition chimique différente formant les zones basique (B) et les zones acides (S).

8. Système de pile à combustible (100 - 700) selon l'une des revendications précédentes, dans lequel le système d'électrolyte (110 - 710) comprend une membrane.

9. Procédé pour faire fonctionner un système de pile à combustible (100), comprenant les étapes :
fourniture et préparation d'un dispositif d'électrolyte (110B) avec au moins une zone conduisant les anions, et d'un dispositif d'électrolyte (110S) avec au moins une zone conduisant les cations,
amenée d'au moins un combustible (1) et d'au moins un agent d'oxydation (2),
évacuation de produits de réaction (1, 3, 4, 5), au moins une partie d'au moins un produit de réaction (3), qui est engendré au niveau d'un dispositif d'électrolyte (110B), étant amené à l'autre dispositif d'électrolyte (110S).
